# DEMANDE DE BREVET EUROPEEN

(11) **EP 1 112 689 A2**
(43) Date de publication de la demande: **04.07.2001**
(21) Numéro de dépôt: 00403631.5
(22) Date de dépôt: 21.12.2000
(51) Int. Cl.: A01N 63/04, A01N 37/46, A01N 45/00

(54) **Utilisation d'un complexe élicitine-lipide pour la protection des plantes contre les pathogenes**

(30) Priorité: 22.12.1999 FR 9916221
(71) Demandeur: INSTITUT NATIONAL DE LA RECHERCHE AGRONOMIQUE (INRA), 75007 Paris Cédex 07 (FR)
(72) Inventeur: Blein, Jean-Pierre, 21490 Varois-Chaignot (FR); Boudon, Elisabeth, 21600 Ouges (FR); Mikes, Vladimir, 602 00 Brno (CZ); Milat, Marie-Louise, 21600 Longvic (FR); Panabieres, Franck, 06600 Antibes (FR); Ponchet, Michel, 06600 Antibes (FR); Tirilly, Yves, 29470 Plougastel-Daoulas (FR)
(74) Mandataire: Vialle-Presles, Marie José

(57) **Abrégé**

L'invention est relative à l'utilisation d'un complexe élicitine-lipide pour la protection des végétaux contre des agents pathogènes, notamment pour la protection de plantes naturellement non-réactives aux élicitines, ou pour le traitement de maladies induites par des phytoplasmes.

## Description

L'invention concerne l'utilisation d'élicitines complexées avec des lipides à des fins de phytoprotection.

Les élicitines sont des protéines extra-cellulaires, qui ont été mises en évidence chez certaines espèces de champignons phytopathogènes de la classe des Oomycètes [cf. revue par P. RICCI, « Induction of the Hypersensitive Response and Systemic Acquired Resistance by Fungal Proteins : the Case of Elicitins », parue dans Plant-Microbes Interactions, Volume 3, édité par G. STACEY et N.T. KEEN, (éditions CHAPMAN et HALL) pp. 53-75, (1997)]. Lorsqu'elles sont inoculées à une plante-hôte réactive, les élicitines induisent :
- une réaction d'hypersensibilité se manifestant par la formation de lésions nécrotiques localisées, situées non seulement au point d'inoculation, mais également au niveau de territoires foliaires distants de celui-ci ;
- l'activation de mécanismes de défense non-spécifique conduisant à l'acquisition d'une résistance systémique à large spectre, dénommée « SAR » (pour : « systemic acquired resistance ») .

Les Inventeurs ont précédemment montré que les élicitines pouvaient capter et complexer des lipides, notamment des stérols, et permettre, par l'intermédiaire du complexe ainsi formé, leur transfert vers, ou à partir de micelles, ou bien de membranes naturelles ou artificielles [Demande PCT/FR98/02203 au nom de l'INRA ; MIKES et al., FEBS Lett., 416, 190-92, (1997) ; MIKES et al., Biochem. Biophys. Res. Comm., 245, 133-139 (1998) ; VOTHRIN et al., Biochim. Biophys. Acta., 1419, 335-342, (1999)].

Des observations récentes de l'équipe des Inventeurs leur ont permis d'établir que le chargement des élicitines par une molécule lipidique est la première étape de l'interaction plante-élicitine. Ce chargement induit un changement de conformation de la protéine, qui permet sa reconnaissance par des sites de fixation spécifiques situés sur la membrane plasmique des cellules végétales, et qui constituent ainsi des récepteurs biologiques des élicitines. Ces résultats montrent que la forme biologiquement active des élicitines est un complexe élicitine-lipide, pouvant se former *in planta* à partir des lipides, notamment des stérols, présents dans les membranes biologiques.

Les Inventeurs ont alors recherché si l'application à une plante-hôte d'un complexe élicitine-lipide exogène, c'est à dire formé préalablement à la mise en contact de ladite élicitine avec ladite plante-hôte, entraînait des effets biologiques comparables à ceux observés avec une élicitine seule.

Ils ont alors constaté que de façon surprenante, la complexation avec un lipide potentialisait les effets biologiques des élicitines, à savoir notamment l'induction d'une réaction hypersensible et/ou d'une résistance systémique acquise.

La présente invention a pour objet l'utilisation d'un lipide pour potentialiser les effets protecteurs d'une élicitine contre les agents phytopathogènes.

La présente invention a notamment pour objet l'utilisation d'un complexe élicitine-lipide pour la protection des végétaux contre des agents pathogènes.

La présente invention a plus particulièrement pour objet un procédé de protection d'une plante contre un agent pathogène, caractérisé en ce qu'il comprend :
- la formation d'un complexe élicitine-lipide ;
- l'application dudit complexe à ladite plante.

Selon un mode de mise en oeuvre préféré de la présente invention, ledit lipide est choisi parmi les stéroïdes, les acides gras et les phospholipides. Selon une modalité particulièrement avantageuse de ce mode de mise en oeuvre, ledit lipide est un stérol.

Un complexe élicitine-lipide utilisable pour la mise en oeuvre de la présente invention, peut être formé très simplement par mélange de ladite élicitine avec une préparation dudit lipide, comme décrit par exemple dans la Demande PCT PCT/FR98/02203.

N'importe quelle protéine de la famille des élicitines peut être utilisée dans le cadre de la présente invention. On citera notamment. des élicitines de *Phytophthora,* qu'il s'agisse d'élicitines acides telles que la capsicéine et la parasiticéine, ou d'élicitines basiques telles que la cryptogéine et la cinnamomine, ainsi que des élicitines acides de *Pythium* [HUET et al., Molecular Plants/Microbes Interactions, 8(2), 302-310, (1995) ; PANABIERES et al., Mycol. Res., 101, 1459-1468, (1997)].

La présente invention permet notamment de potentialiser l'activité d'élicitines peu actives. A titre d'exemple on citera une nouvelle élicitine acide, dénommée ci-après oligandrine, purifiée par l'équipe des Inventeurs à partir de filtrats de culture de *Pythium oligandrum*. La séquence d'ARNm de cette élicitine est représentée dans la liste de séquence en annexe sous le numéro SEQ ID NO: 1, et sa séquence polypeptidique déduite est représentée sous le numéro SEQ ID NO: 2.

L'oligandrine est une protéine d'environ 10kD, de pI voisin de 4, présentant des homologies de séquences avec les élicitines connues. Elle est dépourvue d'activité nécrosante lorsqu'elle est utilisée seule. Les Inventeurs ont toutefois constaté que lorsqu'elle était complexée à un lipide, conformément à la présente invention, elle était capable d'induire une réaction hypersensible se manifestant par l'apparition de nécroses foliaires.

La présente invention permet aussi d'utiliser des élicitines pour le traitement et la protection vis-à-vis des pathogènes de plantes non-réactives aux élicitines, telles que la tomate, ou bien le poivron, la pomme de terre ou la vigne.

Il est également possible d'envisager l'utilisation des élicitines à des fins de phytoprotection vis-à-vis de maladies telles que les maladies vasculaires à phytoplasmes, contre lesquelles on ne disposait pas jusqu'à présent, de traitements efficaces.

La présente invention sera mieux comprise à l'aide du complément de description qui va suivre, qui se réfère à des exemples non-limitatifs illustrant notamment la potentialisation des effets d'une élicitine par sa complexation avec un lipide.

### EXEMPLE 1 : PURIFICATION DE L'OLIGANDRINE :

*P. oligandrum* est cultivé dans le milieu liquide suivant : 0,6 g H₂PO₄ ; 0,7 g KNO₃ ; 0,25 g mgSO₄, 7H₂O ; 0,125 g K₂HPO₄,3H₂O ; 0,3 g Ca (NO₃)₂ ; 1 mg H₃BO₃ ; 1,5 mg MnSO₄,H₂O ; 4 mg ZnSO₄ , 7H₂O ; 0,1 mg Na₂MoO₄,2H₂O ; 20 µg KI ; 20 µg CuSO₄,5H₂O ; 20 µg CoCl₂,6H₂O ; 8 mg FeNa₂ EDTA ; 1 mg acide nicotinique ; 1 mg pyridoxine ; 1 mg pantothénate de calcium ; 1 mg hydrochlorure de thiamine ; 1 g asparagine ; 20 g glucose, pour 1000 mL d'eau désionisée. Après huit jours de culture à l'obscurité à 24°C, le mycélium est séparé du milieu par filtration sous vide (filtre GF/C WHATMAN). Le filtrat de culture obtenu est ensuite concentré 10 fois par évaporation sous vide à 35°C puis dialysé de manière extensive contre de l'eau désionisée pendant 24h à 4°C.

L'oligandrine est purifiée par chromatographie d'échange d'ions, à partir du filtrat concentré, selon le protocole suivant :
Après addition d'acétate de sodium (concentration finale 10 mM) et ajustement du pH à 3,5 avec une solution aqueuse à 10% d'acide trifluoroacétique, le concentré est chargé sur une colonne d'échange de cations MACROPREP SULFOPROPYL HIGH S (BIORAD, France) de 20 mL équilibrée au préalable avec une solution 10 mM d'acétate de sodium (pH 3.5). L'élution est effectuée avec une solution 10 mM d'acétate de sodium contenant 0,25 M NaCl (pH 3.5).

La fraction éluée contenant l'oligandrine est ajustée à pH 7, et soumise à une chromatographie en phase inverse sur une colonne SYNCHROPREP C4 (30 *µ*m, 30 Å, SYNCHROM INC.) pré-équilibrée avec 10 mM d'acétate de sodium contenant 0,25 M NaCl (pH 7.0). L'élution par gradient d'acétonitrile (20, 30, 40%, v/v) en formiate de sodium 50 mM, est effectuée à température ambiante. L'oligandrine est récupérée à partir de la fraction à 40% d'acétonitrile.

Le suivi de la purification et le contrôle de la pureté des protéines sont effectués à l'aide des techniques suivantes : RP-HPLC, électrophorèse en gel SDS et électroisofocalisation.

Après élimination sous vide de l'acétonitrile, l'oligandrine purifiée est dialysée contre de l'eau ultrapure, puis lyophilisée.

La séquence N-terminale de l'oligandrine a été établie et a permis de définir des oligonucléotides qui ont été utilisés pour obtenir l'ADNc par RT-PCR.

La séquence d'ADNc de l'oligandrine est représentée dans la liste de séquences en annexe sous le numéro SEQ ID NO:1, et sa séquence polypeptidique est représentée sous le numéro SEQ ID NO:2.

### EXEMPLE 2 : POTENTIALISATION DES EFFETS BIOLOGIQUES DES ELICITINES PAR UN STEROL.

L'activité biologique des élicitines, chargées ou non par un stérol a été évaluée par observation de leur effet nécrosant.

### Chez le tabac :

Des infiltrations de feuilles de tabac ont été réalisées soit avec de la cryptogéine, soit avec de l'oligandrine, complexées ou non avec du stigmastérol, soit avec du stigmastérol seul. Les élicitines sont utilisées sous forme de solutions aqueuses à 1 mg/ml. Le stigmastérol est solubilisé dans l'éthanol (1 mg/ml). Les complexes élicitine-stérol sont obtenus par addition, sous agitation, de la solution de stigmastérol à la solution d'élicitine (40 *µ*l de solution éthanolique de stérol pour 1 ml de solution d'élicitine) .

Les plants de tabac sont cultivés en serre, sous éclairage naturel. Ils sont utilisés lorsque les plantes sont âgées de 70 jours. On infiltre dans les feuilles 100 *µ*l de la solution à tester à l'aide d'une seringue en plastique de 1 ml sans aiguille. Des contrôles sont effectués par infiltration avec un mélange d'eau et de stigmastérol, ou avec un mélange d'eau et d'éthanol.

Les observations sont effectuées 72 h après le traitement.

La cryptogéine utilisée seule, induit une nécrose au niveau du territoire infiltré ; en revanche, on n'observe aucune nécrose dans le cas de l'oligandrine. On n'observe pas de nécrose lorsque le stigmastérol est utilisé seul, ni avec le mélange éthanol-eau.

En revanche, l'infiltration avec le complexe oligandrine-stigmastérol induit l'apparition d'une nécrose au niveau du territoire infiltré ; l'infiltration avec le complexe cryptogéine-stigmastérol augmente considérablement la surface du territoire nécrosé par rapport à la cryptogéine seule.

Afin de vérifier que l'augmentation des effets nécrosants résultait bien de la potentialisation de l'activité biologique des élicitines, et non d'une diffusion plus importante de celles-ci dans les tissus foliaires, des infiltrations ont été effectuées, selon le protocole décrit ci dessus, en utilisant de la cryptogéine radiomarquée à l'iode (¹²⁵I-cryptogéine) pour la localiser dans la zone infiltrée.

Le marquage de la cryptogéine à l'iode (¹²⁵I-cryptogéine) est réalisé suivant un protocole décrit par WENDEHENNE et al., [FEBS Lett., 374, 203-207, (1995)].

On constate, comme précédemment, que la surface du territoire nécrosé est plus importante dans le cas du complexe cryptogéine-stigmastérol que dans celui de la cryptogéine seule ; on observe en outre que la cryptogéine n'est pas présente dans l'ensemble du territoire nécrosé, mais reste localisée au point d'infiltration, qu'elle soit seule, ou chargée avec le stigmastérol. Ces résultats confirment que l'augmentation de la taille de la nécrose ne reflète pas la présence de cryptogéine dans le territoire nécrosé, mais résulte bien la potentialisation de ses effets biologiques.

### Chez la tomate :

L'effet d'un complexe cryptogéine-stigmastérol a également été testé chez la tomate, plante naturellement non-réactive à la cryptogéine.

Les plants de tomates sont cultivés en serre, sous éclairage naturel. Ils sont utilisés lorsque les plantes sont âgées de 70 jours.

L'infiltration avec la cryptogéine ou le complexe cryptogéine-stigmastérol est effectuée dans les conditions indiquées ci-dessus pour le tabac.

Les observations sont effectuées 72 h après le traitement.

La cryptogéine utilisée seule, n'induit pas de nécrose au niveau du territoire infiltré ; en revanche, l'infiltration avec le complexe oligandrine-stigmastérol induit l'apparition d'une nécrose.

### EXEMPLE 3 : EFFET PROTECTEUR DES ELICITINES VIS-A-VIS DES MALADIES A PHYTOPLASMES

Des plants de tabac ont été décapités à l'âge de 4 semaines et greffés avec une bouture de tomate naturellement infectée par des phytoplasmes. Les uns n'ont reçu aucun traitement. Les autres plants ont reçu, le jour du greffage, une application de 5 *µ*g de cryptogéine sur la section d'un pétiole dont la feuille venait d'être excisée. 48 heures après ce traitement, des nécroses, caractéristiques de la réaction d'hypersensibilité induite par la cryptogéine sont apparues sur la plante.

4 mois après la greffe, les tabacs non-traités présentent des signes caractéristiques d'une infection par les phytoplasmes, et notamment, n'ont produit ni fleurs ni graines.

En revanche, les tabacs traités par la cryptogéine présentent un développement, une floraison, et une fructification normaux, bien que des phytoplasmes puissent être détectés dans ces plantes, montrant que l'infection s'est propagée de la tomate au tabac à partir du greffon infecté. Ces résultats montrent qu'un traitement par une élicitine induit une résistance vis-à-vis de l'action pathogène des phytoplasmes, et ce pendant plusieurs mois.

## Revendications

1. Utilisation d'un complexe élicitine-lipide pour la protection des végétaux contre des agents pathogènes.

2. Utilisation selon la revendication 1, caractérisé en ce que ledit lipide est choisi parmi les stéroïdes, les acides gras et les phospholipides.

3. Utilisation selon la revendication 2, caractérisé en ce que ledit lipide est un stérol.

4. Utilisation selon une quelconque des revendications 1 à 3, caractérisée en ce que ladite élicitine est choisie parmi la capsicéine, la parasiticéine, la cryptogéine, et la cinnamomine.

5. Utilisation selon une quelconque des revendications 1 à 3, caractérisée en ce que ladite élicitine est l'oligandrine, représentée par la séquence SEQ ID NO:2.

6. Utilisation selon une quelconque des revendications 1 à 6, caractérisée en ce que le complexe élicitine-lipide est utilisé pour protéger une plante non-réactive aux élicitines.

7. Utilisation selon une quelconque des revendications 1 à 6, caractérisée en ce que le complexe élicitine-lipide est utilisé pour protéger une plante vis-à-vis d'une maladie vasculaire induite par un phytoplasme.
